# EUROPÄISCHE PATENTSCHRIFT

(11) **EP 1 719 291 B1**
(45) Veröffentlichungstag und Bekanntmachung des Hinweises auf die Patenterteilung: **05.01.2011**
(21) Anmeldenummer: 04766490.9
(22) Anmeldetag: 13.08.2004
(51) Int. Cl.: H04L 12/28

(54) **Verfahren, Zwischenstation sowie zentrale Steuereinrichtung zur Paketvermittelten Datenübertragung in einem selbstorganisierten Funknetzwerk**
Method, intermediate station and central control unit for the packet-switched data transmission in a self-organizing radio network
Procédé, station intermediaire et dispositif de controle central pour transmettre des données commutées en paquets dans un réseau radio à organisation autonome

(30) Priorität: 24.02.2004 DE 102004008905
(43) Veröffentlichungstag der Anmeldung: 08.11.2006
(73) Patentinhaber: SIEMENS AKTIENGESELLSCHAFT, 80333 München (DE)
(72) Erfinder: OBERMANNS, Sebastian, 46395 Bocholt (DE)
(86) Internationale Anmeldenummer: PCT/EP2004/051787
(87) Internationale Veröffentlichungsnummer: WO 2005/081454

(56) Entgegenhaltungen:
- GERLA M ET AL: "MULTICLUSTER, MOBILE, MULTIMEDIA RADIO NETWORK" WIRELESS NETWORKS, ACM, US, Bd. 1, Nr. 3, 1. Oktober 1995 (1995-10-01), Seiten 255-265, XP000538239 ISSN: 1022-0038
- MANGOLD, HABETHA, CHOI, NGO: "Co-existence and Interworking of IEEE 802.11a and ETSI BRAN HiperLan/2 in MultiHop Scenarios" THIRD IEEE WORKKSHOP ON WIRELESS LOCAL AREA NETWORKS, 27. - 28. September 2001, Seiten 1-23, XP002314223 BOSTON, USA

## Beschreibung

Die Erfindung betrifft ein Verfahren zur Datenübertragung in einem selbstorganisierten Funknetzwerk gemäß dem Oberbegriff des Anspruchs 1, eine Zwischenstation gemäß Anspruch 8 sowie eine zentrale Steuereinrichtung gemäß Anspruch 9.

Es ist bekannt, dass Stationen eines lokalen Netzwerks (LANs) in der Regel über Kabel miteinander verbunden sind. Derartige Netze werden aber auch zunehmend durch Funknetze, die beispielsweise nach dem WLAN- (IEEE 802.11) Standard funktionieren, ersetzt oder zumindest durch welche ergänzt werden.

Derartige Funknetze lassen sich nach der Art des verwendeten Mediumzugriffsverfahrens prinzipiell in dezentralisierte Netzwerke, beispielsweise ein die "Distributed Coordination Function (DCF)" gemäß IEEE 802.11 einsetzendes Netzwerk, und zentralisierte Netzwerke, beispielsweise gemäß dem Hiperlan/2- oder Bluetooth-Standard gebildete Netzwerke, unterscheiden.

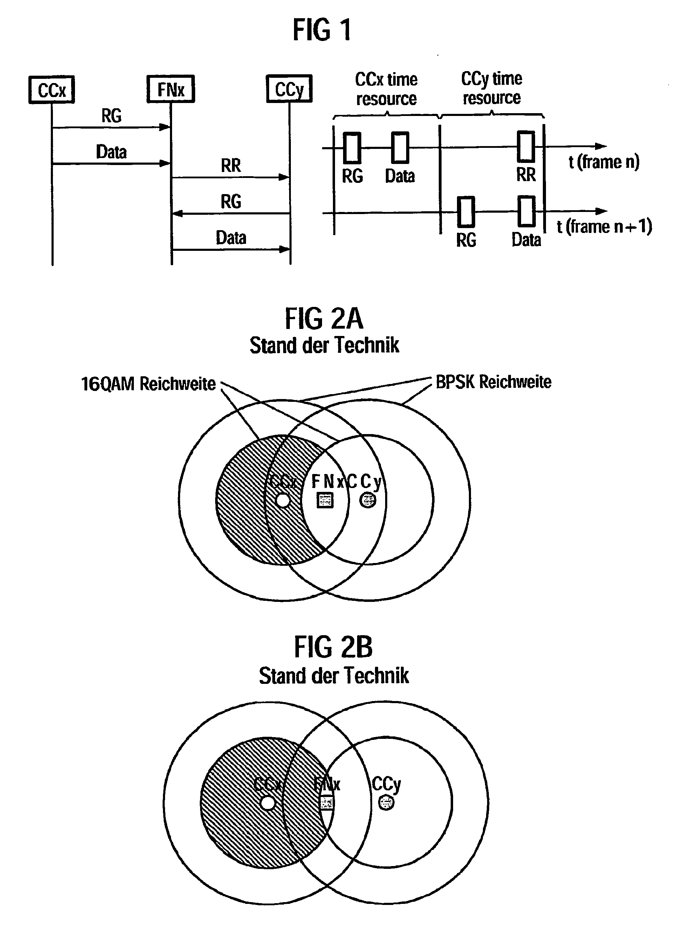

In einem zentralen Netzwerk ist in einem Funkversorgungsbereich (Cluster) eine zentrale Steuereinheit (Central Controller) vorgesehen, die einen Zugriff der in dem Funkversorgungsbereich befindenden Stationen auf die Ressourcen (Übertragungsmedium bzw. Medium) regelt. Beispielsweise erfolgt, wie in Figur 1 dargestellt, ein Senden von Daten seitens einer Station innerhalb des Clusters erst nachdem der Station durch den Central Controller die zu verwendende Ressource bekannt gegeben wurde, wobei gemäß Hiperlan/2 dies derart erfolgt, dass alle Stationen, die senden wollen, zunächst einen sogenannten "Resource Request" (RR) an den Central Controller senden, der zur Freigabe der Datenübertragung innerhalb eines gemäß der Funkschnittstelle definierten Übertragungsrahmens ein "Resource Grant" (RG) an die betreffende Station übermittelt. Eigene Datentransmissionen werden vom Central Controller auch mit einem RG im gleichen MAC Rahmen angezeigt. Die RG Nachrichten enthalten entsprechend dem Hiperlan/2 Standard Kontrollinformationen für die Datenübertragung. Für beide Fälle sind dies im Wesentlichen die Identifikationen von Sender und Empfänger, eine Verbindungsidentifikation, Anzahl und Art der Transportkanäle, Zeitpunkt des Beginns der Transmission, sowie die Art der auf der physikalischen Schicht zu verwendenden Kodierungs- und Modulationsschema. "Resource Grant" Nachrichten werden zu Beginn der MAC Rahmen vom Central Controller über den sogenannten "Frame Channel" (FCH) gesendet.

Aus "J. Habetha and M. Nadler, Concept of a wireless centralised multihop ad hoc network", in "Proc. European Wireless, Dresden, Sept. 2000", ist es auch bekannt, dass ein zentralisiertes Hiperlan/2 Netzwerk aus mehreren Clustern besteht, die jeweils einen Central Controller aufweisen. Diese Erweiterung des Netzwerks von einem Cluster zu mehreren Clustern wird auch als sogenanntes Multi-Cluster Netzwerk bezeichnet und ist so ausgestaltet, dass die Central Controller den Medienzugriff unabhängig voneinander steuern, was durch einen Reuse-Faktor von größer 1 erreicht wird, wobei man unter dem Begriff "Reuse-Faktor" den Abstand bezeichnet, der zwischen Funkversorgungsbereichen liegt, bei denen sich die genutzten Ressourcen, d.h. im Allgemeinen die zur Verfügung stehenden Frequenzen, wiederholen.

Bei einer Abwandlung des oben beschriebenen Systems kann den zentralen Steuereinheiten der Cluster statt unterschiedlichen Frequenzen auch nicht überlappende periodische Zeitintervalle auf einer einzigen Frequenz als zu verwaltendende Ressource zugeteilt werden.

Dabei ist es vorteilhaft, Übertragungsbandbreite in möglichst wenige Ressourcen zu unterteilen, was durch nach Möglichkeit große Abstände zwischen den Central Controllern erreicht werden kann. Hierfür werden vorteilhafter Weise aufgrund des Abstands zum Datenaustausch zwischen je zwei benachbarten Funkversorgungsbereichen Zwischenstationen (Forwarding Nodes) benötigt, die sich im Überlappungsbereich der Funkversorgungsbereiche befinden und daher zwei Clustern zuordenbar sind.

Nachteilig bei den beschriebenen Netzwerken ist, dass zur Übertragung von Daten zwischen zwei entfernten Clustern mehrere Zwischenstationen sowie Central Controller involviert und somit deren Ressourcen belegt sind und zudem durch das Ressourcenzuteilungsverfahren für die beteiligten Zwischenstationen eine Verzögerung erfolgt, wie sich aus dem in Figur 1 dargestellten Datenfluss erkennen lässt.

Die der Erfindung zugrunde liegende Aufgabe ist es, ein Verfahren anzugeben, welches einen effektiveren Datenaustausch in einem selbstorganisierenden Multi-Cluster Netzwerk ermöglicht.

Diese Aufgabe wird ausgehend von dem Verfahren zur Datenübertragung in einem selbstorganisierten Funknetzwerk gemäß dem Oberbegriff des Anspruchs 1 durch dessen kennzeichnenden Merkmale, von der Zwischenstation gemäß den Merkmalen des Anspruchs 8 sowie von der zentralen Steuereinrichtung gemäß den Merkmalen des Anspruchs 9 gelöst.

Bei dem erfindungsgemäßen Verfahren zur paketvermittelten Datenübertragung in einem selbstorganisierten Funknetzwerk, mit zumindest einem ersten und einem zweiten Funkversorgungsbereich sowie mindestens einer mobilen Kommunikationseinrichtung je Funkversorgungsbereich, wobei in dem ersten Funkversorgungsbereich eine erste Einrichtung und im zweiten Funkversorgungsbereich eine zweite Einrichtung zur zentralen Steuerung der Vergabe von dem jeweiligen Funkversorgungsbereich zugeordneter Übertragungskanäle und eine mobiLe Kommunikationseinrichtung sowohl im ersten als auch zweiten Funkversorgungsbereich als eine Zwischenstation zur Weiterleitung von aus dem ersten Funkversorgungsbereich entspringenden Daten zum zweiten Funkversorgungsbereich betrieben werden, erfolgt die Weiterleitung derart, dass durch erste zentrale Steuereinrichtung die dem ersten Funkversorgungsbereich zur Verfügung stehenden Übertragungskanäle sowohl für die Datenübertragung zwischen der ersten zentralen Steuereinrichtung und der Zwischenstation als auch für die Datenübertragung zwischen der Zwischenstation und der zweiten zentralen Steuereinrichtung gesteuert wird.

Durch das erfindungsgemäße Verfahren führt dies dazu, dass eine durch das Weiterleiten hervorgerufene Verzögerung der Datenpaketübertragung minimiert wird. Neben anderen Wirkungen des erfindungsgemäßen Verfahrens lassen sich Zwischenstationen einfacher betreiben. Zudem muss, im Gegensatz zum aus dem Stand der Technik bekannten Verfahren, ein zu einem entfernten Funkversorgungsbereich zu übertragendes Paket nur jeweils einmal von dem Paket-Scheduler der zentralen Steuereinheit bearbeitet werden. Da die erste zentrale Steuereinheit die Ressourcenvergabe sowohl für die (Teil-)Übertragung eines Datenpaketes zur Zwischenstation als auch für die (Teil-)Übertragung zur nächsten erreichbaren zweiten Steuerungseinheit steuert, reduziert sich die Anzahl von Anfragen und Antworten zur Ressourcevergabe, so dass die vorhandenen Ressourcen effektiver genutzt werden. Es wird auch eine weitere Konzentration von Funktionen auf die zentrale Steuereinrichtung erreicht, die dazu führen, dass die als Zwischenstationen betriebenen Kommunikationsendgeräte von zusätzlichem Aufwand befreit werden und weniger komplexe Funktionen bereitstellen müssen.

Vorzugsweise werden die hinzugefügten Kontrollinformationen auf einem separaten Übertragungskanal, insbesondere einem FCH Kanal, übertragen, wenn sichergestellt ist, dass die zweite Steuereinheit den FCH Kanal der ersten Steuereinheit empfangen kann. Hierdurch entfällt ein Zufügen von Inhalten zu den weiterzuleitenden Daten. Zudem werden wesentlich weniger Zwischenstationen involviert, da die Kontrollinformationen direkt von einer empfangenden zentralen Steuereinrichtung dekodiert werden können. Derartige Steuerkanäle können im Hinblick auf Übertragungsfehler eine robustere Kodierung aufweisen, beispielsweise gemäß "Binary Phase Shift Keying" BPSK, so dass die auf diesen Steuerkanälen übertragene Kontrollinformation in einem weiteren Radius empfangen werden können. In diesem Fall könnten im Prinzip auch Nutzdaten ebenso robust direkt ohne Zwischenstation von der ersten zur zweiten Steuereinheit übertragen werden. Bei Verwendung einer Zwischenstation kann sich dennoch eine bzgl. der belegten Netzwerkressource effektivere Übertragung ergeben, wenn durch die Aufteilung in zwei Übertragungen auf beiden Strecken eine höherwertige Codierung und Modulation verwendet werden kann, als bei der direkten Übertragung.

Alternativ fügt die Zwischenstation den weiterzuleitenden Daten die Kontrollinformation für die zweite zentrale Steuereinrichtung hinzu, falls der FCH Kanal seitens der zweiten zentralen Steuereinrichtung nicht empfangbar ist. Dies ist insbesondere dann von Vorteil, wenn sich die zweite zentrale Steuereinrichtung nicht in Funkreichweite der ersten zentralen Steuereinrichtung befindet. In so einem Fall können die den Daten zugefügten Kontrollinformationen durch die Zwischenstation weitergeleitet und durch die zweite zentrale Steuereinrichtung dekodiert werden. Hierdurch erhält die zweite Steuereinrichtung weitere Informationen über die von der Zwischenstation weitergeleiteten Daten, die sie in die Lage versetzen, die Daten zu dekodieren und fehlerfrei zu empfangen.

Diese Vorgehensweise des Hinzufügens von Kontrollinformationen auf den Nutzdatenkanälen ist auch ergänzend einsetzbar. Beispielsweise ist eine Weiterbildung denkbar, bei der, wenn sich durch eine Erhöhung der Distanz zwischen der ersten zentralen Steuereinrichtung und der zweiten zentralen Steuereinrichtung oder durch andere Einflüsse der Empfang des FCH Kanals verschlechtert, die erste zentrale Steuereinrichtung die Zwischenstation anweist, die Kontrollinformationen der RG Nachricht über den Nutzdatenkanal weiterzuleiten bzw. im Falle einer Verbesserung der Empfangssituation die Anweisung wieder zurücknimmt.

Vorzugsweise werden dabei die Kontrollinformationen der die Übertragung beschreibenden RG Nachricht (mit Ausnahme des Zeitpunktes der Übertragung) den weiterzuleitenden Daten zugefügt. Hierdurch ist der Empfänger der weiterzuleitenden Daten bestimmt. Zudem sind beispielsweise Hinweise zur Kodierung der Daten enthalten, die eine angepasste Dekodierung ermöglichen.

Die Daten können z.B. nicht im Funkversorgungsbereich der zweiten zentralen Steuereinrichtung terminieren, sondern dieser Funkversorgungsbereich kann lediglich ein Glied einer Verbindungskette von Funkversorgungsbereichen zur Senke der Daten darstellen. In so einem Fall wird die erfindungsgemäße Vorgehensweise entsprechend wiederholt, so dass ein kaskadenartiges Zusammenwirken bis hin zum Ziel der Daten realisiert ist.

Durch die erfindungsgemäße Zwischenstation werden Mittel zur Durchführung des vorstehend erläuterten Verfahrens bereitgestellt, so dass eine Implementierung des Verfahrens zum Aufbau eines verbesserten Kommunikationssystems ermöglicht wird.

Durch die erfindungsgemäße zentrale Steuereinrichtung werden Mittel zur Durchführung des vorstehend erläuterten Verfahrens bereitgestellt, so dass eine Implementierung des Verfahrens zum Aufbau eines verbesserten Kommunikationssystems ermöglicht wird.

Weitere Vorteile und Einzelheiten der Erfindung werden anhand der Figuren erläutert. Es zeigen die
- Figur 1: einen Datenfluss gemäß dem Stand der Technik,???
- Figur 2a: CCx und CCy in gegenseitiger Reichweite (Fall A),
- Figur 2b: CCx und CCy außerhalb ihrer Reichweite (Fall B),
- Figur 3a: eine Abhängigkeit der Wirkung des durch das erfin- dungsgemäße Verfahren erzeugten Signalverlaufs für die in Figur 2a dargestellte Anordnung,
- Figur 3b: eine Abhängigkeit der Wirkung des durch das erfin- dungsgemäße Verfahren erzeugten Signalverlaufs für die in Figur 2b dargestellte Anordnung.

Die Figur 1 zeigt einen Medium Access Control Datenfluss, wie er gemäß dem Stand der Technik realisiert ist. Zu erkennen ist, dass für ein Weiterleiten von Daten DATA eine Reihe von Datenpaketen RR, RG für die Zuteilung von Ressourcen versendet werden. Dies verzögert die Weiterleitung der Daten DATA und belegt zudem Ressourcen der Nutzdatenübertragung.

In Figur 2a ist modellhaft eine mögliche Anordnung eines drahtlosen Kommunikationssystems dargestellt, wie sie auch in aus dem Stand der Technik bekannten Netzen bekannt ist und in der das erfindungsgemäße Verfahren zum Einsatz kommt. Dargestellt ist eine erste zentrale Steuereinrichtung CCX, eine Zwischenstation FNX sowie eine zweite zentrale Steuereinrichtung CCY. Des Weiteren ist ein erster Funkversorgungsbereich, der durch die erste zentrale Steuereinrichtung CCX bereitgestellt wird, sowie ein zweiter Funkversorgungsbereich, der durch die zweite zentrale Steuereinrichtung CCY bereitgestellt wird, zu erkennen, wobei sich bei dem ersten und zweiten zentralen Funkversorgungsbereich eine Reichweite ergibt, in der Nutzdaten mit mobilen Endgeräten ausgetauscht werden können und die sich unter anderem durch die Modulationsart bzw. Kodierung - gemäß dem Beispiel 16 Quadratur Amplituden Modulation (16QAM) - erzielen lässt.

Zu erkennen ist zudem noch ein dritter Funkversorgungsbereich sowie ein vierter Funkversorgungsbereich, bei denen sich eine größere Reichweite als die des ersten Funkversorgungsbereiches und zweiten Funkversorgungsbereiches durch die für Steuerdatenübertragung verwandte Modulationsart, beispielsgemäß dem Binary Phase Shift Keying (BPSK), ergibt.

Bei dem dargestellten Ausführungsbeispiel ist sichtbar, dass sich die zentralen Steuereinrichtungen CCX, CCY hinsichtlich der Steuerdatenübertragung jeweils in Reichweite der anderen Steuereinrichtung befinden. Der für die Übertragung der Steuerdaten vorgesehene BPSK Kanal, gemäß Ausführungsbeispiel mit FCH bezeichnet, kann somit erfindungsgemäß derart genutzt werden, dass Kontrollinformationen, wie beispielsweise die Empfängeradresse und das Format von weiterzuleitenden Daten, direkt von der ersten zentralen Steuereinrichtung CCX zur zweiten zentralen Steuereinrichtung CCY sowie in umgekehrter Richtung übertragen werden. Von der zweiten zentralen Steuereinrichtung CCY kann dann eine weitere Weiterleitung zu einer (nicht dargestellten) dritten zentralen Steuereinrichtung initiiert werden. Durch ein derartiges Hintereinanderschalten (Kaskadieren) von gemäß dem erfindungsgemäßen Verfahren realisierten Weiterleitungen lassen sich auch sehr große Distanzen überbrücken. Da die Kontrollinformationen direkt an die jeweils beteiligten Steuereinrichtungen übertragen werden, können die beteiligten Zwischenstationen ohne umfangreiche Änderungen gemäß dem erfindungsgemäßen Verfahren betrieben werden und der Schwerpunkt der im Rahmen der Implementierung des Verfahrens erforderlichen Anpassungen liegt bei den zentralen Steuereinrichtungen.

Eine alternative Anordnung ist in Figur 2b dargestellt. Die dargestellte Anordnung enthält bereits aus der vorherigen Anordnung bekannte Elemente, die daher mit den gleichen Bezugszeichen bezeichnet sind. Zu erkennen ist, dass die erste zentrale Steuereinrichtung CCX sowie die zweite zentrale Steuereinrichtung CCY nicht mehr miteinander über Steuerdatenkanäle kommunizieren können. Lediglich die Zwischenstation FNX befindet sich nach wie vor in Reichweite für eine Datenübertragung auf Nutzdatenkanälen sowohl in Richtung der ersten zentralen Steuereinrichtung als auch in Richtung der zweiten zentralen Steuereinrichtung CCY.

Für die beschriebene Anordnung ist es von Vorteil, wenn erfindungsgemäß die Kontrollinformationen RG2 (siehe Figur 2) den weiterzuleitenden Daten beigefügt werden (dargestellt als Fall B in Figur 2), so dass diese durch die zweite zentrale Station CCY dekodiert und ausgewertet werden können, um die weiterzuleitenden Daten zum gewünschten Ziel transportieren zu können.

Bei der gezeigten Anordnung muss die zweite zentrale Steuereinrichtung CCY in der Lage sein, zu beliebigen Zeiten außerhalb der der zweiten zentralen Steuereinrichtung CCY zugeordneten Zeitressourcen die Übertragung im Rahmen einer Weiterleitung zu detektieren. Dies wird durch ein spezielles Burstformat erreicht. Dabei ist zu beachten, dass die zweite zentrale Steuereinrichtung CCY die durch die erste zentrale Steuereinrichtung CCX und/oder die Zwischenstation FNX weitergeleiteten Daten aufgrund der Trennung im Zeitbereich zwischen den Funkversorgungsbereichen empfangen kann.

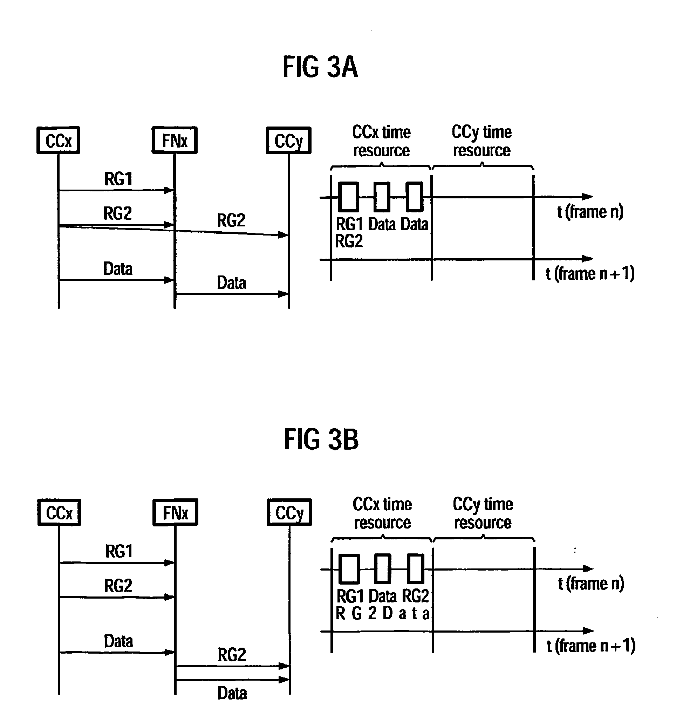

Der wesentliche vorteilhafte Effekt des erfindungsgemäßen Verfahrens ist aus der Figur 3a zu entnehmen, die einen sich erfindungsgemäß ergebenden Medium Access Control Datenfluss darstellt.

Zu erkennen ist, dass weiterzuleitende Daten DATA von der ersten zentralen Steuereinrichtung CCX zur Zwischenstation FNX und von dort aus ohne Verzug zur zweiten zentralen Steuereinrichtung CCY übertragen werden. Dies ergibt sich dadurch, dass, im Vergleich zum aus oben beschriebenen und dargestellten Datenfluss gemäß dem Stand der Technik, aufgrund des erfindungsgemäßen Verfahrens keine, im Allgemeinen zeitlich versetzt zu den Daten DATA versendeten, Ressourcenanforderungsanfragen anfallen.

Dies hat auch den Vorteil, dass die vorhandenen Ressourcen durch derartige Nachrichten nicht belegt werden.

Ebenfalls dargestellt ist die Nutzung der Ressourcen bei der Weiterleitung gemäß dem erfindungsgemäßen Verfahren. Zu sehen ist, dass die weiterzuleitenden Daten DATA in der Zeitressource des durch die erste zentrale Steuereinheit CCX bereitgestellten Funkversorgungsbereichs zur zweiten zentralen Steuereinrichtung CCY gelangen.

Neben den bereits erläuterten Vorteilen wird dadurch auch ein Eintragen von Paketen in Sendewarteschlangen vermieden. Zudem werden Zwischenstationen von einer IP Router Funktionalität befreit, was zu einer weiteren Reduktion der Komplexität der Zwischenstationen führt.

## Patentansprüche

1. Verfahren zur paketvermittelten Datenübertragung in einem selbstorganisierten Funknetzwerk, mit zumindest einem ersten und einem zweiten Funkversorgungsbereich sowie mindestens einer mobilen Kommunikationseinrichtung je Funkversorgungsbereich, wobei in dem ersten Funkversorgungsbereich eine erste Einrichtung und im zweiten Funkversorgungsbereich eine zweite Einrichtung zur zentralen Steuerung der Vergabe von dem jeweiligen Funkversorgungsbereich zugeordneter Übertragungskanäle und eine mobile Kommunikationseinrichtung sowohl im ersten als auch zweiten Funkversorgungsbereich als eine Zwischenstation zur Weiterleitung von aus dem ersten Funkversorgungsbereich entspringenden Daten zum zweiten Funkversorgungsbereich betrieben werden, **dadurch gekennzeichnet, dass** die Weiterleitung derart erfolgt, dass durch die erste zentrale Steuereinrichtung die dem ersten Funkversorgungsbereich zur Verfügung stehenden Übertragungskanäle sowohl für die Datenübertragung zwischen der ersten zentralen Steuereinrichtung und der Zwischenstation als auch für die Datenübertragung zwischen der Zwischenstation und der zweiten zentralen Steuereinrichtung gesteuert werden.

2. Verfahren nach Anspruch 1, **dadurch gekennzeichnet, dass** die hinzugefügten Kontrollinformationen durch die erste zentrale Steuereinrichtung auf einem separaten Übertragungskanal, insbesondere einem FCH Kanal, übertragen werden.

3. Verfahren nach Anspruch 1, **dadurch gekennzeichnet, dass**, falls der FCH Kanal seitens der zweiten zentralen Steuereinrichtung nicht empfangbar ist, durch die Zwischenstation den weiterzuleitenden Daten für die zweite zentrale Steuereinrichtung Kontrollinformationen hinzufügt werden.

4. Verfahren nach einem der Ansprüche 1 bis 3, **dadurch gekennzeichnet, dass** den Kontrollinformationen zumindest die Adresse der zweiten zentralen Steuereinrichtung und/oder das Format der weiterzuleitenden Daten zugefügt werden.

5. Verfahren nach einem der Ansprüche 1 bis 4, **dadurch gekennzeichnet, dass** die Kontrollinformationen durch die Zwischenstation ausgewertet werden.

6. Verfahren nach einem der Ansprüche 1 bis 4, **dadurch gekennzeichnet, dass** die Kontrollinformationen durch die zweite zentrale Steuereinrichtung ausgewertet werden.

7. Verfahren nach einem der vorstehenden Ansprüche, **dadurch gekennzeichnet, dass** das Funknetzwerk mit zentraler Mediumzugriffskontrolle gemäß dem IEEE802.11-Standard, IEEE802.16, Hiperlan/2 oder Derivaten hiervon Standard betrieben wird.

8. Zwischenstation zur Durchführung des Verfahrens nach einem der vorhergehenden Ansprüche.

9. Zentrale Steuereinrichtung zur Durchführung des Verfahrens nach einem der Ansprüche 1 bis 6.

## Claims

1. Method for packet-switched data transmission in a self-organising radio network with at least one first and one second radio coverage area together with at least one mobile communication device for each radio coverage area, whereby a first device is operated in the first radio coverage area, and a second device in the second radio coverage area, for the purpose of central control of the assignment of the transmission channels assigned to the radio coverage area concerned, and a mobile communication device is operated both in the first and also in the second radio coverage area as intermediate stations, for forwarding to the second radio coverage area data originating in the first radio coverage area, **characterised in that** the forwarding takes place in such a way that the first central control device controls the transmission channels available to the first radio coverage area, both for the transmission of data between the first central control device and the intermediate station and also for the transmission of data between the intermediate station and the second central control device.

2. Method in accordance with claim 1, **characterised in that** the control data which is appended is transmitted by the first central control device on a separate transmission channel, in particular an FCH channel.

3. Method in accordance with claim 1, **characterised in that** if the FCH channel cannot be received by the second central control device, the intermediate station appends to the data which is to be forwarded control data for the second central control device.

4. Method in accordance with one of the claims 1 to 3, **characterised in that** to the control data is added at least the address of the second central control device and/or the format of the data to be forwarded.

5. Method in accordance with one of the claims 1 to 4, **characterised in that** the control data is analysed by the intermediate station.

6. Method in accordance with one of the claims 1 to 4, **characterised in that** the control data is analysed by the second central control device.

7. Method in accordance with one of the preceding claims, **characterised in that** the radio network is operated using central medium access control in accordance with the IEEE802.11 standard, IEEE802.16, Hiperlan/2 or standards which are derivatives of these.

8. Intermediate station for carrying out the method in accordance with one of the preceding claims.

9. Central control device for carrying out the method in accordance with one of the claims 1 to 6.

## Revendications

1. Procédé pour transmettre des données commutées par paquets dans un réseau radio à organisation autonome avec au moins une première et une deuxième zone de desserte radio ainsi qu'au moins un dispositif de communication mobile pour chaque zone de desserte radio, un premier dispositif étant exploité dans la première zone de desserte radio et un deuxième dispositif étant exploité dans la deuxième zone de desserte radio aux fins de la commande centrale de l'attribution de canaux de transmission affectés à la zone de desserte radio respective et un dispositif de communication mobile étant exploité tant dans la première que dans la deuxième zone de desserte radio en tant que station intermédiaire pour la retransmission de données issues de la première zone de desserte radio vers la deuxième zone de desserte radio, **caractérisé en ce que** la retransmission s'effectue de manière telle que le premier dispositif de commande central commande les canaux de transmission à la disposition de la première zone de desserte radio tant pour la transmission de données entre le premier dispositif de commande central et la station intermédiaire que pour la transmission de données entre la station intermédiaire et le deuxième dispositif de commande central.

2. Procédé selon la revendication 1, **caractérisé en ce que** les informations de contrôle ajoutées sont transmises par le premier dispositif de commande central sur un canal de transmission séparé, et plus particulièrement sur un canal FCH.

3. Procédé selon la revendication 1, **caractérisé en ce que**, si le canal FCH ne peut pas être reçu par le deuxième dispositif de commande central, la station intermédiaire ajoute des informations de contrôle aux données à retransmettre pour le deuxième dispositif de commande central.

4. Procédé selon l'une des revendications 1 à 3, **caractérisé en ce qu'**au moins l'adresse du deuxième dispositif de commande central et/ou le format des données à retransmettre sont ajoutés aux informations de contrôle.

5. Procédé selon l'une des revendications 1 à 4, **caractérisé en ce que** les informations de contrôle sont évaluées par la station intermédiaire.

6. Procédé selon l'une des revendications 1 à 4, **caractérisé en ce que** les informations de contrôle sont évaluées par le deuxième dispositif de commande central.

7. Procédé selon l'une des revendications précédentes, **caractérisé en ce que** le réseau radio est exploité en standard avec un contrôle d'accès central au médium conformément au standard IEEE 802.11, IEEE 802.16, Hiperlan/2 ou à des dérivés de ceux-ci.

8. Station intermédiaire permettant d'exécuter le procédé selon l'une des revendications précédentes.

9. Dispositif de commande central permettant d'exécuter le procédé selon l'une des revendications 1 à 6.
